# EUROPEAN PATENT SPECIFICATION

(11) **EP 3 848 942 B1**
(45) Date of publication and mention of the grant of the patent: **20.08.2025**
(21) Application number: 19857722.3
(22) Date of filing: 03.09.2019
(51) Int. Cl.: G21C 7/06

(54) **LOAD-FOLLOWING OPERATION SYSTEM INCLUDING BORON CONCENTRATION ADJUSTMENT AND LOAD-FOLLOWING OPERATION METHOD USING SAME**
LASTFOLGEBETRIEBSSYSTEM MIT BORKONZENTRATIONSJUSTIERUNG UND LASTFOLGEBETRIEBSVERFAHREN DAMIT
SYSTÈME D'OPÉRATION DE SUIVI DE CHARGE AVEC AJUSTEMENT DE CONCENTRATION DE BORE ET PROCÉDÉ DE FONCTIONNEMENT ASSOCIÉ

(30) Priority: 06.09.2018 KR 20180106496
(43) Date of publication of application: 14.07.2021
(73) Proprietor: Korea Hydro & Nuclear Power Co., Ltd, 38120 Gyeongsangbuk-do (KR)
(72) Inventor: YU, Keuk Jong, Daejeon 34023 (KR)
(74) Representative: Habermann, Hruschka & Schnabel
(86) International application number: PCT/KR2019/011285
(87) International publication number: WO 2020/050574

(56) References cited:
- JP-A- 2004 317 229
- JP-A- 2004 317 229
- JP-A- S6 244 685
- JP-A- S61 280 600
- JP-A- S62 265 591
- JP-B2- 6 132 521
- KR-A- 20160 054 267
- KR-A- 20160 054 267
- OH SOO-YOUL; JONGHWA JANG: "A Core Behaviour during Daily Load Following Operations by the Mode K Method of Next Generation Nuclear Power Plant", JOURNAL OF THE KOREAN ATOMIC ENERGY SOCIETY 1996 SPRING CONFERENCE (1), 1 May 1996 (1996-05-01), pages 117 - 124, XP009525132

## Description

### Technical Field

The present disclosure relates to a load-following operation system including boron concentration adjustment and a load-following operation method using the same.

### Background Art

During a power change operation such as daily load following, a pressurized water reactor type nuclear power plant changes its power through boron concentration control and control rod control of a nuclear reactor.

Among them, the control rod control is controlled by an automatic nuclear reactor control system for power and power distribution, but the boron concentration is controlled by manually predicting and calculating the required boron concentration by an operator based on the overall understanding of a boron concentration history, a nuclear reactor power history, and the like.

The control (change) of the boron concentration is very important in the daily load following operation, and the like because it has a great influence on the movement of the control rod. Therefore, during the repeated daily load following operation, the boron concentration control becomes a great burden on the operator.

From JP S6244685A a method for controlling a control rod for xenon in a pressurized water reactor is known.

From JP 6132521B2 a subcriticality measuring method and device capable of evaluating subcriticality in a wide range from subcriticality to criticality with high precision is known. From KR 1020160054267A a load-following operation method of a nuclear reactor and a load-following operation system for the same are known.

From JP 2004317229A a system realizing a load following operation based on high precision dynamic characteristic analysis is known.

The present invention is defined by the subject matter of the appended claims.

### Disclosure

### Technical Problem

An object of the present disclosure provides a load-following operation system including boron concentration adjustment and a load-following operation method using the same.

### Technical Solution

There is provided a load-following operation system for a nuclear reactor load-following operation including boron concentration adjustment, the load-following operation system comprising: a boron concentration control unit for adjusting a boron concentration, the boron concentration control unit comprising a boron concentration determination unit for determining a boron concentration on the basis of input first operation information and a boron concentration adjustment for adjusting a boron concentration according to the determination of the boron concentration determination unit; and a control rod control unit for controlling a control rod, the control rod control unit comprising a control rod determination for determining a control of the control rod on the basis of input second operation information and a control rod driving unit for controlling the control rod according to the determination of the control rod determination unit.

The first operation information may include a set core temperature and an operating core temperature, and the boron concentration control unit may adjust the boron concentration when a difference between the set core temperature and the operating core temperature is a certain level or higher.

The first operation information may further include an axial power distribution setting value of a core and an axial power distribution operation value of the core, and the boron concentration control unit may adjust the boron concentration when the difference between the set core temperature and the operating core temperature is a certain level or lower and a difference between the axial power distribution setting value and the axial power distribution operation value is a certain level or higher.

The first operation information may further include a height from a lower portion of a core of a preceding control group, and the boron concentration control unit may adjust the boron concentration so that the boron concentration is lowered, when the set core temperature is higher than the operating core temperature by a certain level, the difference between the axial power distribution setting value and the axial power distribution operation value is a certain level or higher, and the height from the lower portion of the core of the preceding control group is a certain level or higher.

There is provided a nuclear reactor load-following operation method, comprising: determining boron concentration adjustment every first time interval based on input first operation information; adjusting a boron concentration according to a determination of the boron concentration adjustment; determining control of a control rod every second time interval shorter than the first time based on input second operation information; and controlling the control rod according to the control determination of the control rod.

The first operation information may include a set core temperature and an operating core temperature, and in the determination of the boron concentration adjustment, the boron concentration may be adjusted when a difference between the set core temperature and the operating core temperature is a certain level or lower.

The first operation information may further include an axial power distribution setting value of a core and an axial power distribution operation value of the core, and in the determination of the boron concentration adjustment, the boron concentration may be adjusted when a difference between the axial power distribution setting value and the axial power distribution operation value is a certain level or higher.

The first operation information may further include a height from a lower portion of a core of a preceding control group, and in the determination of the boron concentration adjustment, the boron concentration is adjusted so that the boron concentration is lowered, when the set core temperature is higher than the operating core temperature by a certain level, the difference between the axial power distribution setting value and the axial power distribution operation value is a certain level or higher, and the height from the lower portion of the core of the preceding control group is a certain level or higher.

### Advantageous Effects

According to the present disclosure, there is provided the load-following operation system including boron concentration adjustment and the load-following operation method using the same.

### Description of Drawings

FIG. 1 is a diagram illustrating a load-following operation system according to an embodiment of the present disclosure.
FIGS. 2A, 2B, and 2C are diagrams illustrating a boron concentration adjustment process in the load-following operation system according to the embodiment of the present disclosure.

### Mode for Disclosure

Hereinafter, the present disclosure will be described in more detail with reference to the accompanying drawings.

However, the accompanying drawings are only examples illustrated in order to describe the technical idea of the present disclosure in more detail. Therefore, the technical idea of the present disclosure is not limited to forms of the accompanying drawings. In addition, in order to describe the relationship between each component, the size, spacing, and the like may be exaggerated in the attached drawings unlike the actual size and spacing.

The present disclosure may provide an amount of change in boron concentration for controlling boron concentration required during a planned load following operation (daily load following operation, etc.), thereby reducing the burden of changing the boron concentration on the operator and more accurately operating a power plant when the operator performs the repetitive load-following operation.

In the present disclosure, a control rod control unit capable of controlling a power (average temperature) and power distribution of a nuclear reactor using a control rod is required, and the control rod control unit may use an automatic nuclear reactor control system and the like that uses the existing model prediction control methodology. In the present disclosure, by adding a boron concentration control unit for boron concentration adjustment, the control rod control unit and the boron concentration control unit are driven in real time.

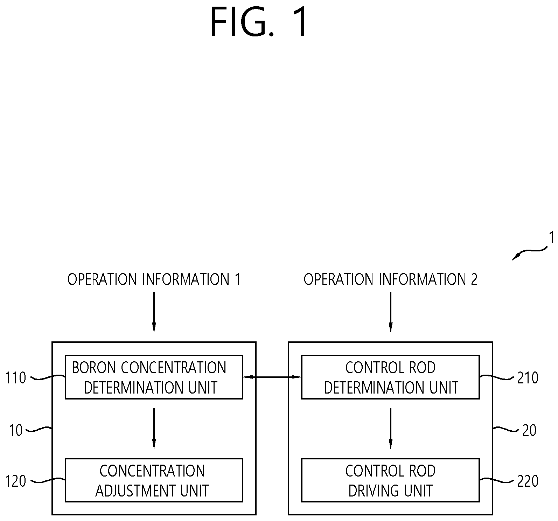

A load-following operation system according to an embodiment of the present disclosure will be described with reference to FIG. 1.

A load-following operation system 1 includes a boron concentration control unit 10 and a control rod control unit 20.

The boron concentration control unit 10 includes a boron concentration determination unit 110 and a concentration control unit 120.

The boron concentration determining unit 110 determines boron concentration from input operation information 1. The determination of the boron concentration includes a determination on detailed operation information such as (1) increase or dilution of a boron concentration, (2) increase/dilution width, and/or (3) input amount/input time to input boron for increasing the boron concentration or input supplementary water for diluting the boron concentration.

The load-following operation system 1 selects and receives an power/power distribution history, a control rod movement history, a current boron concentration, and a target power and power distribution history according to time for daily load-following operation among operating variables of a nuclear power plant.

The operation information 1 may include the current boron concentration, the target power, the target power distribution, and the like. In addition, the operation information 1 may further include a current power and current power distribution, and may also include history information of the information. Meanwhile, control rod position information included in operation information 2 may also be included in the operation information 1, or the boron concentration control unit 10 may obtain the control rod position information of the operation information 2.

The concentration control unit 120 additionally inputs boron or additionally inputs supplementary water according to the boron concentration determined by the boron concentration determination unit 110.

As described above, the boron concentration control unit 10 calculates the boron dilution/injection rate every specific time (e.g., 60 seconds, first hour) by inputting the operation variables, calculates the required boric acid water and amount of supplementary water, and then injects the calculated boric acid water and amount of supplementary water for a specific time.

The control rod control unit 20 includes a control rod determination unit 210 and a control rod driving unit 220.

The control rod determination unit 210 determines the driving of the control rod by calculating an insertion/drawing speed of the control rod based on the operation information 2. The control rod driving unit 220 drives the control rod according to the determination of the control rod determination unit 210.

The control rod control unit 20 drives the control rod for a specific time by calculating the insertion/drawing speed of the control rod every specific time (e.g., 10 seconds, second time which is shorter than the first time). The control rod control unit 20 may use various control rod control algorithms such as the existing control rod control methodology or model predictive control methodology, and therefore detailed descriptions thereof will be omitted.

The operation information 2 includes target power, target power distribution, current control rod position, etc., and may include historical data for the information.

The determination items of the boron concentration determination unit 110 and the determination items of the control rod determination unit 210 may be shared with each other to be a basis for the determination. In another embodiment, the determination items of the boron concentration determination unit 110 and the determination items of the control rod determination unit 210 may not affect each other.

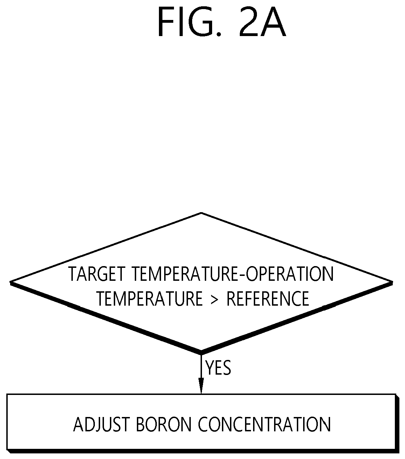

The boron concentration adjustment will be described in detail with reference to FIGS. 2A to 2C.

FIGS. 2A to 2C are diagrams illustrating a boron concentration adjustment process in the load-following operation system according to the embodiment of the present disclosure.

First, as illustrated in FIG. 2A, when a difference between a set core temperature and an operating core temperature is a certain level (e.g., 0.5°C) or higher, the difference is reduced by adjusting the boron concentration (by inputting boron or supplementary water). Specifically, if the set core temperature is higher, the supplementary water is input to lower the boron concentration, and if the set core temperature is lower, the boron is input to increase the boron concentration. As a result, it is possible to reduce the movement of the control rod.

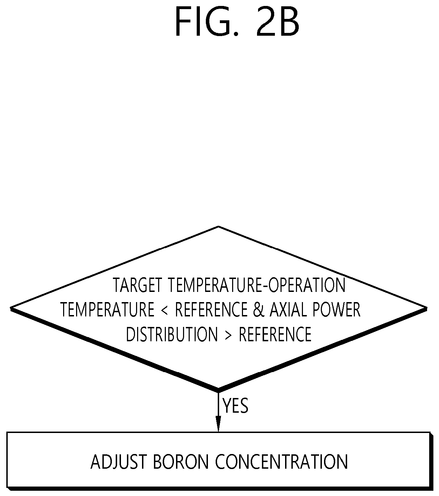

Next, as illustrated in FIG. 2B, when the difference between the set core temperature and the operating core temperature is a certain level (e.g., 0.5°C) or lower, and a set value of an axial power distribution (ASI) of the core has a predetermined difference (e.g., 0.02) or more from an operation value of the axial power distribution of the core, the difference is reduced by adjusting the boron concentration. As a result, it is possible to reduce the movement of the control rod.

The axial power distribution (ASI) means (lower core power - upper core power)/(lower core power + upper core power).

By the above definition, the ASI with + (positive number) means that the lower core power is greater than the upper core power, and the ASI with - (negative number) means that the upper core power is greater than the lower power. Normally, the axial power distribution during the operation has a value within +/-0.2.

In the above boron concentration adjustment, a specific flow rate of the input boron or supplementary water for adjustment may vary according to the boron concentration. For example, when the boron concentration is 200 ppm or more (first concentration), the supplementary water is supplied at a first flow rate, and when the boron concentration is less than 200 ppm (second concentration which is lower than the first concentration), the supplementary water is supplied at a second flow rate equal to or lower than the first flow rate. During the normal operation, the boron concentration is about 100 to 1500 ppm. When the boron concentration is less than 200 ppm, it is difficult to further lower the concentration according to the capacity of the supplementary water pump, so when the boron concentration is equal to or less than 200 ppm, a lower flow rate is selected.

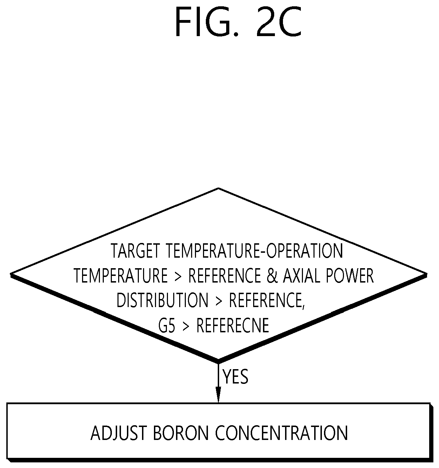

Next, as illustrated in FIG. 2C, the power increases by diluting boron in advance by preparing for the case where the power is not returned to full power only by drawing the control rod during the daily load following operation as illustrated in FIG. 2C. Specifically, when the set core temperature is higher than the operating core temperature by a certain level, the difference in the axial power distribution is a certain level or higher, and the preceding control group G5 is higher than a certain height from the lower portion of the core. Here, the predetermined height may mean a height at which the control rod is substantially completely placed on the top (in a structure in which the control rod is inserted from the top to the bottom) or a height in which there is no difference in a fully drawn state and a role. In another embodiment, the predetermined height may be set to 80%, 90%, or 95% of the height that does not differ in the role of the fully drawn state described above.

If the boron concentration control unit 10 and the control rod control unit 20 as described above are connected to one system, the operator may supply the required boric acid water/supplementary water at the determined boron concentration (dilution/injection rate) and the control rod control unit 20 may control the power and power distribution to perform the repetitive daily load following operation.

The above-described embodiments are examples for describing the present disclosure, and the present disclosure is not limited thereto. Since those of ordinary skill in the art to which the present disclosure pertains will be able to implement the present disclosure by various modifications therefrom, the technical protection scope of the present disclosure should be determined by the appended claims.

## Claims

1. A load-following operation system for a nuclear reactor load-following operation including boron concentration adjustment, the load-following operation system comprising:
a boron concentration control unit for adjusting a boron concentration,
the boron concentration control unit comprising
a boron concentration determination unit (110) for determining a boron concentration on the basis of input first operation information comprising the current boron concentration, the target power, and the target power distribution and
a boron concentration adjustment unit (120)for adjusting a boron concentration according to the determination of the boron concentration determination unit; and
a control rod control unit for controlling a control rod, the control rod control unit comprising
a control rod determination unit (210) for determining a control of the control rod on the basis of input second operation information comprising target power, target power distribution, and current control rod position and
a control rod driving unit (220) for controlling the control rod according to the determination of the control rod determination unit,
**characterized in that**
the first operation information includes a set core temperature and an operating core temperature, and further an axial power distribution setting value of a core and an axial power distribution operation value of the core, and
the boron concentration control unit is adapted to adjust the boron concentration when a difference between the set core temperature and the operating core temperature is a certain level or lower and a difference between the axial power distribution setting value and the axial power distribution operation value is a certain level or higher.

2. A nuclear reactor load-following operation method, comprising:
determining (110) boron concentration adjustment every first time interval based on input first operation information comprising the current boron concentration, the target power, and the target power distribution;
adjusting (120) a boron concentration according to a determination of the boron concentration adjustment;
determining (220) control of a control rod every second time interval shorter than the first time interval based on input second operation information comprising target power, target power distribution, and current control rod position; and
controlling the control rod according to the control determination of the control rod,
**characterized in that**
the first operation information includes a set core temperature and an operating core temperature, and further an axial power distribution setting value of a core and an axial power distribution operation value of the core, and
in the determination of the boron concentration adjustment, the boron concentration is adjusted when a difference between the set core temperature and the operating core temperature is a certain level or lower and a difference between the axial power distribution setting value and the axial power distribution operation value is a certain level or higher

## Patentansprüche

1. Lastfolgebetriebssystem für einen Kernreaktor-Lastfolgebetrieb mit Justierung einer Borkonzentration, wobei das Lastfolgebetriebssystem aufweist:
eine Borkonzentrations-Steuereinheit zum Justieren einer Borkonzentration,
wobei die Borkonzentrations-Steuereinheit aufweist:
eine Borkonzentrations-Bestimmungseinheit (110) zum Bestimmen einer Borkonzentration auf der Grundlage von eingegebenen ersten Betriebsinformationen, die die aktuelle Borkonzentration, die Zielleistung und die Zielleistungsverteilung aufweisen, und
eine Borkonzentrations-Justiereinheit (120) zum Justieren einer Borkonzentration gemäß der Bestimmung der Borkonzentrations-Bestimmungseinheit; und
eine Steuerstab-Steuereinheit zum Steuern eines Steuerstabs,
wobei die Steuerstab-Steuereinheit aufweist:
eine Steuerstab-Bestimmungseinheit (210) zum Bestimmen einer Steuerung des Steuerstabs auf der Grundlage von eingegebenen zweiten Betriebsinformationen, die eine Zielleistung, eine Zielleistungsverteilung und eine aktuelle Steuerstabposition aufweisen, und
eine Steuerstab-Antriebseinheit (220) zum Steuern des Steuerstabs gemäß der Bestimmung der Steuerstab-Bestimmungseinheit,
**dadurch gekennzeichnet, dass**
die ersten Betriebsinformationen eine Soll-Kerntemperatur und eine Betriebskerntemperatur und ferner einen Einstellwert der axialen Leistungsverteilung eines Kerns und einen Betriebswert der axialen Leistungsverteilung des Kerns umfassen, und
die Borkonzentrations-Steuereinheit angepasst ist, um die Borkonzentration zu justieren, wenn eine Differenz zwischen der Soll-Kerntemperatur und der Betriebskerntemperatur ein bestimmtes Niveau oder niedriger ist und eine Differenz zwischen dem Einstellwert der axialen Leistungsverteilung und dem Betriebswert der axialen Leistungsverteilung ein bestimmtes Niveau oder höher ist.

2. Lastfolgebetriebsverfahren eines Kernreaktors, aufweisend:
Bestimmen (110) der Justierung der Borkonzentration in jedem ersten Zeitintervall auf der Grundlage von eingegebenen ersten Betriebsinformationen, die die aktuelle Borkonzentration, die Zielleistung und die Zielleistungsverteilung aufweisen;
Justieren (120) einer Borkonzentration gemäß einer Bestimmung der Justierung der Borkonzentration;
Bestimmen (220) der Steuerung eines Steuerstabs in jedem zweiten Zeitintervall, das kürzer als das erste Zeitintervall ist, basierend auf eingegebenen zweiten Betriebsinformationen, die die Zielleistung, die Zielleistungsverteilung und die aktuelle Steuerstabposition aufweisen; und
Steuern des Steuerstabs entsprechend der Steuerbestimmung des Steuerstabs,
**dadurch gekennzeichnet, dass**
die erste Betriebsinformationen eine Soll-Kerntemperatur und eine Betriebskerntemperatur und ferner einen Einstellwert der axialen Leistungsverteilung eines Kerns und einen Betriebswert der axialen Leistungsverteilung des Kerns umfassen, und
bei der Bestimmung der Justierung der Borkonzentration die Borkonzentration justiert wird, wenn eine Differenz zwischen der Soll-Kerntemperatur und der Betriebskerntemperatur ein bestimmtes Niveau oder niedriger ist und eine Differenz zwischen dem Einstellwert der axialen Leistungsverteilung und dem Betriebswert der axialen Leistungsverteilung ein bestimmtes Niveau oder höher ist.

## Revendications

1. Système d'opération de suivi de charge pour une opération de suivi de charge de réacteur nucléaire avec ajustement d'une concentration de bore, le système d'opération de suivi de charge comprenant:
une unité de commande de concentration de bore pour ajuster une concentration de bore,
dans lequel l'unité de commande de concentration de bore comprend:
une unité de détermination de concentration de bore (110) pour déterminer une concentration de bore sur la base de premières informations opérationnelles d'entrée comprenant la concentration de bore actuelle, la puissance cible et la distribution de puissance cible, et
une unité d'ajustement de concentration de bore (120) pour ajuster une concentration de bore selon la détermination de l'unité de détermination de concentration de bore; et
une unité de commande de barre de commande pour commander une barre de commande,
l'unité de commande de barre de commande comprenant:
une unité de détermination de barre de commande (210) pour déterminer une commande de la barre de commande sur la base de deuxièmes informations opérationnelles d'entrée comprenant une puissance cible, une distribution de puissance cible et une position de barre de commande actuelle, et
une unité d'entraînement de barre de commande (220) pour commander la barre de commande selon la détermination de l'unité de détermination de barre de commande,
**caractérisé en ce que**
les premières informations opérationnelles comprennent une température de noyau cible et une température de noyau d'opération, et comprennent en outre une valeur de réglage de la distribution de puissance axiale d'un noyau et une valeur d'opération de la distribution de puissance axiale du noyau, et
l'unité de détermination de concentration de bore et adaptée pour ajuster la concentration de bore lorsqu'une différence entre la température de noyau cible et la température de noyau d'opération est d'un certain niveau ou inférieure et une différence entre la valeur de réglage de la distribution de puissance axiale et la valeur d'opération de la distribution de puissance axiale est d'un certain niveau ou supérieure.

2. Procédé d'opération de suivi de charge d'un réacteur nucléaire, comprenant:
déterminer (110) de l'ajustement de la concentration de bore à chaque premier intervalle de temps sur la base de premières informations opérationnelles d'entrée comprenant la concentration de bore actuelle, la puissance cible et la distribution de puissance cible;
ajuster (120) une concentration de bore selon une détermination de l'ajustement de la concentration de bore;
déterminer (220) la commande d'une barre de commande à chaque deuxième intervalle de temps qui est plus court que le premier intervalle de temps, sur la base de deuxièmes informations opérationnelles d'entrée comprenant la puissance cible, la distribution de puissance cible et la position actuelle de la barre de commande; et
commander la barre de commande en fonction de la détermination de commande de la barre de commande, **caractérisé en ce que**
les premières informations opérationnelles comprennent une température de noyau cible et une température de noyau d'opération, et comprennent en outre une valeur de réglage de la distribution de puissance axiale d'un noyau et une valeur d'opération de la distribution de puissance axiale du noyau, et
lors de la détermination de l'ajustement de la concentration en bore, la concentration en bore est ajustée lorsqu'une différence entre la température de noyau cible et la température de noyau d'opération est d'un certain niveau ou inférieure et une différence entre la valeur de réglage de la distribution de puissance axiale et la valeur d'opération de la distribution de puissance axiale est d'un certain niveau ou supérieure.
